# EUROPEAN PATENT SPECIFICATION

(11) **EP 3 263 540 B1**
(45) Date of publication and mention of the grant of the patent: **25.09.2019**
(21) Application number: 17178179.2
(22) Date of filing: 27.06.2017
(51) Int. Cl.: C04B 41/86

(54) **FIREPROOF BOARD**
FEUERFESTE PLATTE
PLANCHE IGNIFUGÉE

(30) Priority: 30.06.2016 JP 2016130562
(43) Date of publication of application: 03.01.2018
(73) Proprietor: NGK Insulators, Ltd., Nagoya-city, Aichi 467-8530 (JP); NGK Adrec Co., Ltd., Kani-gun, Gifu 505-0112 (JP)
(72) Inventor: KOMIYAMA, Tsuneo, Kani-gun, Gifu 505-0112 (JP); KAKAMU, Kinya, Kani-gun, Gifu 505-0112 (JP)
(74) Representative: Mewburn Ellis LLP

(56) References cited:
- JP-A- 2015 171 985

## Description

### Technical Field

The present teachings disclose a technique related to a fireproof board, particularly a technique related to a fireproof board of silicon nitride-bonded silicon carbide.

### Background Art

A fireproof board constituted of silicon nitride-bonded silicon carbide, in which silicon carbide (SiC) is bonded by silicon nitride, is known. Such a fireproof board has excellent strength and thermal resistance. However, performance thereof may be deteriorated due to influences such as oxidation from long-term use. Japanese Patent Publication No. H07-47507 discloses a technique forming glass coating on a surface of a fireproof board. Such a glass coating can suppress surface oxidation of the fireproof board, and can suppress performance deterioration (deterioration of durability or the like) of the fireproof board. JP 2015-171985 A discloses a glass film on a SiC refractory bonded with silicon nitride.

### Summary of Invention

As described above, performance deterioration of the fireproof board is suppressed by forming the glass coating on the surface of the fireproof board. However, when the fireproof board is heated, the glass on the surface is softened. Due to this, when an object to be heated is placed on the fireproof board and heated in a heating furnace, the object may be adhered to the fireproof board via the glass. If the object is adhered to the fireproof board, a surface layer of the object is peeled off and adhered to the glass when the object is separated from the fireproof board. Accordingly, adhesion of the surface layer of the object to the fireproof board needs to be suppressed. The present teachings provide a technique of realizing a fireproof board less likely to be adhered to an object to be heated while suppressing performance deterioration of the fireproof board.

A fireproof board disclosed herein is constituted of silicon nitride-bonded silicon carbide. The fireproof board has a side surface, a front surface, and a rear surface. The side surface is covered with glass of a first thickness. At least one surface of the front surface and the rear surface has a first region. The first region is covered with glass of a second thickness that is less than the first thickness or not covered with glass. The first thickness is 5 µm or more and 100 µm or less and the second thickness is 7 µm or less.

Since the above-described fireproof board has the side surface that is covered with the glass of the first thickness, the side surface of the fireproof board can be suppressed from oxidation by heating, and thus the performance deterioration of the fireproof board can be suppressed. Further, the first region is provided in the front surface and/or the rear surface of the fireproof board. The glass on the first region has the thickness that is less than that of the glass on the side surface (or the glass is not provided on the first region). Due to this, if an object to be heated is placed on the first region, adhesion of the object to the fireproof board via the glass can be suppressed. The surface layer of the object can be suppressed from peeling off, which improves production yield of the object. The above-described fireproof board can improve the production yield of the object while suppressing the performance deterioration of the fireproof board itself. It should be noted that since the first region of the fireproof board is covered with the object to be heated, the performance deterioration of the fireproof board due to oxidation of the first region is suppressed as well. Hereinafter, a phenomenon where a surface layer of an object to be heated is peeled off and is adhered to glass, will be simply expressed as "an object to be heated is adhered to glass".

### Brief Description of Drawings

FIG. 1 is a perspective view of a fireproof board of a first embodiment;
FIG. 2 is a front surface view of the fireproof board of the first embodiment;
FIG. 3 is a rear surface view of the fireproof board of the first embodiment;
FIG. 4 is a cross sectional view of the fireproof board of the first embodiment;
FIG. 5 is a rear surface view of a fireproof board of a variant of the first embodiment; and
FIG. 6 is a cross sectional view of a fireproof board of a second embodiment.

### Description of Embodiments

Hereinafter, some features of a technique disclosed herein will be summarized. It should be noted that each matter described below has technical usefulness independently.

A fireproof board disclosed herein is constituted of silicon nitride-bonded SiC. At least a side surface of the fireproof board is covered with glass. The side surface of the fireproof board is covered with glass of a first thickness. A first region is provided on at least one surface of a front surface and a rear surface of the fireproof board, and a thickness of glass on the first region is less than the thickness of the glass on the side surface (first thickness). The thickness of the glass on the first region is a second thickness (including a thickness of "zero"). Hereinafter, one surface will be described as "a front surface" and the other surface will be described as "a rear surface". The technique disclosed herein can also be applied to a fireproof board in which the one surface is a "rear surface" and the other surface is a "front surface".

The first thickness is equal to or more than 5µm, preferably equal to or more than 10µm, and particularly preferably equal to or more than 50µm. Further, the first thickness is equal to or less than 100µm. If the first thickness is less than 5µm, an effect of suppressing oxidation of silicon nitride-bonded silicon carbide is reduced, and thus corrosion resistance is decreased. Further, if the first thickness is more than 100µm, cracks are likely to occur on the glass due to repeated heating and cooling cycles, which results in reduced coating effect of the glass and decreased corrosion resistance. Further, when the cracks are generated in the glass, the glass is likely to be peeled off from a substrate (silicon nitride-bonded silicon carbide), which results in the decreased corrosion resistance.

The second thickness is equal to or less than 7µm, and preferably equal to or less than 5µm, and particularly preferably zero. That is, the first region may not be covered with glass. If the second thickness is equal to or more than 10µm, the object to be heated is more prone to adhering to the glass when heating is carried out by placing the object on the first region.

The first region may be provided over an entirety of the front surface of the fireproof board or may be provided on a part of the front surface. The first region is preferably provided on a part of the front surface of the fireproof board. In this case, the first region may be provided at a center of the fireproof board, and the second region having the glass thickness that is more than the glass thickness (the second thickness) of the first region may be provided outside the first region. The second region preferably surrounds the first region. The glass thickness of the second region is a third thickness. The third thickness is appropriately selected within a same range as the above-mentioned preferable range of the first thickness. The first thickness and the third thickness may be the same.

In a configuration that the second region surrounds the first region, the second region may be provided over an entire surface outside the first region. In this case, the glass provided on the second region may be continuous with the glass provided on the side surface of the fireproof board. Due to this, it is possible to reliably protect corner portions of the front surface and the side surface.

The first region may be provided only on the front surface of the fireproof board or may be provided on both of the front and rear surfaces. In this case, both the first region and the second region may be provided on each of the front and rear surfaces of the fireproof board. Also, in the case where the first region and the second region are provided on the front and rear surfaces of the fireproof board, layouts of the first region and the second region may be the same on the front surface and rear surface or may be different. If the layouts of the first region and the second region are the same on the front and rear surfaces, when the "front surface" is deteriorated, the "rear surface" can be used as the "front surface".

The silicon nitride-bonded SiC contains SiC (silicon carbide) as a main component, and contains nitrides such as Si₃N₄ (silicon nitride) and Si₂ON₂ (silicon oxynitride) as a bonding material of the SiC. It should be noted that a term "silicon nitride" may hereinafter be used as a generic term of Si₃N₄ and Si₂ON₂. The fireproof board may contain elements such as Fe (iron), Al (aluminum), B (boron) and the like besides SiC and silicon nitride.

SiC is used as aggregate for the fireproof board. A content of SiC in the fireproof board is preferably 65 to 80 mass%, more preferably 70 to 80 mass%, particularly preferably 75 to 80 mass%.

Silicon nitride is used as the bonding material for SiC (aggregate). Strength and impact resistance of the fireproof board are improved by containing silicon nitride. Silicon nitride is formed by reacting Si and N by burning a mixed material containing SiC (aggregate) and Si under N (nitrogen) atmosphere. A content of silicon nitride is preferably 20 to 50 %, more preferably 30 to 45 %, particularly preferably 30 to 40 % relative to SiC (a ratio of silicon nitride to SiC when SiC is 100) in terms of weight ratio.

Fe is an element derived from sintering aid used in formation (sintering) of the fireproof board. Although not particularly limited, Fe₂O₃ (iron oxide) may be used as the sintering aid. Fe₂O₃ is preferably added in an amount of 0.3 to 0.7 mass% to the material before sintering.

Although not particularly limited, the glass may be formed by oxidizing silicon nitride-bonded SiC obtained by burning the above-mentioned mixed material (SiC and Si). Specifically, after the above-mentioned mixed material is burned (primary burning) under the N atmosphere to form the fireproof board containing silicon nitride-bonded silicon carbide, the fireproof board is burned under oxygen atmosphere (secondary burning) to form a glass phase of SiO₂ (silicon oxide) on the front surface of the fireproof board. It should be noted that the glass may contain SiO₂ as a main component, and may contain elements such as Al and B. In this occasion, a content of SiO₂ in the glass is preferably 70 to 90 mass%. Although not particularly limited, 0.3 to 10 mass% of Al₂O₃ (aluminum oxide) and 2.5 to 15 mass% of B₄C (boron carbide) are preferably added in the above-described mixed material. Due to this, the glass containing SiO₂ as a main component and containing elements such as Al and B is formed. It should be noted that the glass may contain Mg, Ca, Sr, Ti or the like as a trace component (1 mass% or less). Further, the fireproof board on which the glass is formed on the surface layer thereof can be obtained by applying a material containing a desired glass composition ratio on the front surface of the silicon nitride-bonded SiC-based fireproof board.

Al contributes to improvement of glass strength. A content of Al in the fireproof board is preferably in a range from 0.25 to 2,4 mass%, more preferably from 1.0 to 2.4 mass%, particularly preferably from 1.5 to 2.4 mass%. B contributes to reduction of melting point of the glass and suppression of occurrence of cracks in the glass when using the fireproof board (when heating the fireproof board). In addition, decomposition of SiO₂ can be suppressed when the fireproof board is heated under low oxygen atmosphere by containing B. The content of B in the fireproof board is preferably 1.5 to 8.5 mass%, more preferably 3.0 to 8.5 mass%, particularly preferably 6.0 to 8.5 mass%.

The fireproof board disclosed herein can be manufactured by burning (primary burning) the above-described material composing silicon nitride-bonded silicon carbide (SiC, Si) under the nitrogen atmosphere, and then burning (secondary burning) the burned body under the oxygen atmosphere. Due to the secondary burning, the surface layer of the silicon nitride-bonded silicon carbide is oxidized to form the glass phase (mainly composed of SiO₂) on the surface layer. The first region having the glass thickness that is less than those of the other parts can be formed by removing a part of the glass phase corresponding to the first region (or by making the thickness of the glass phase thin) after completion of the secondary burning. It should be noted that removal of the glass phase can be carried out by sandblasting or the like. Alternatively, if necessary, a mixed material obtained by mixing the material composing silicon nitride-bonded silicon carbide and a material containing the above-described elements composing the glass, may be subjected to the primary burning.

As another method, after the primary burning of the material composing silicon nitride-bonded silicon carbide (if necessary mixed material containing elements composing the above-described glass as well), burned body thereof may be subjected to the secondary burning in a state where a part corresponding to the first region is covered. In this case, since oxidation of the covered part is suppressed, the first region having the glass thickness less than those of the other parts can be formed.

As another method, the glass layer may be formed on the surface of the fireproof board by the primary burning of the material composing the silicon nitride-bonded silicon carbide, followed by applying glass material (SiO₂, Al₂O₃, B₄C etc.) on the silicon nitride-bonded silicon carbide fireproof board, and drying or further burning. After that, the fireproof board having the first region can be manufactured by removing a part of the glass layer corresponding to the first region (or by making the thickness of the glass layer thin). It should be noted that the first region can be formed by applying the glass material to a part other than the first region, and then drying or sintering it.

### (First Embodiment)

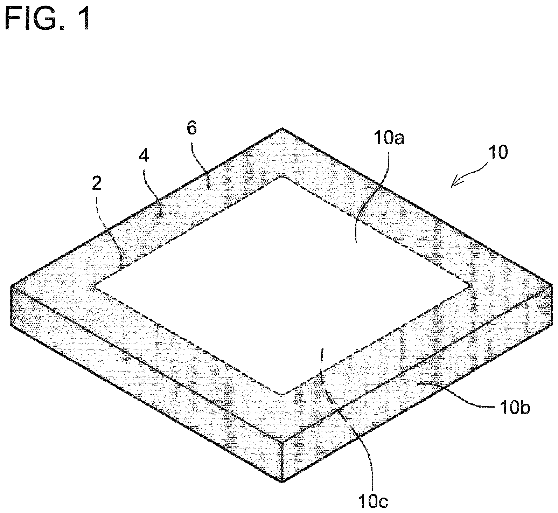

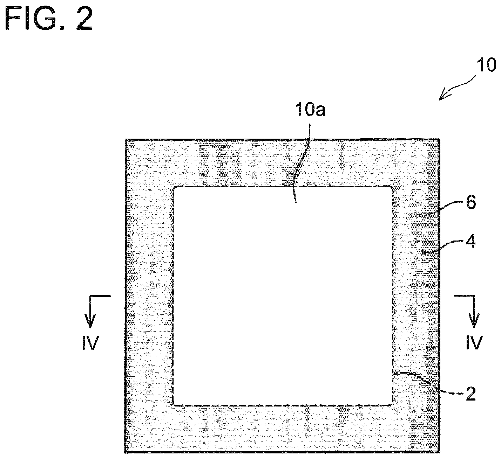

Referring to FIGS. 1 to 4, a fireproof board 10 will be explained. As shown in FIG. 1, side surfaces 10b, collectively corresponding to "a side surface" of the claims, of the fireproof board 10 are covered with glass 6. The glass 6 surrounds the side surfaces 10b. Further, a front surface 10a of the fireproof board 10 includes a first region 2 and a second region 4. The first region 2 is not covered with the glass 6, and the second region 4 is covered with the glass 6 (see FIG. 2 as well). Silicon nitride-bonded silicon carbide that is a main material of the fireproof board 10, is exposed on a front layer of the first region 2. The first region 2 is provided at a center of the front surface 10a, and the second region 4 surrounds the first region 2 outside the first region 2. The second region 4 is provided fully to end portions of the front surface 10a. The glass 6 covering the side surfaces 10b is continuous with the glass 6 covering the second region 4. It should be noted that the glass 6 is mainly constituted of SiO₂ and contains Al₂O₃ and B₄C.

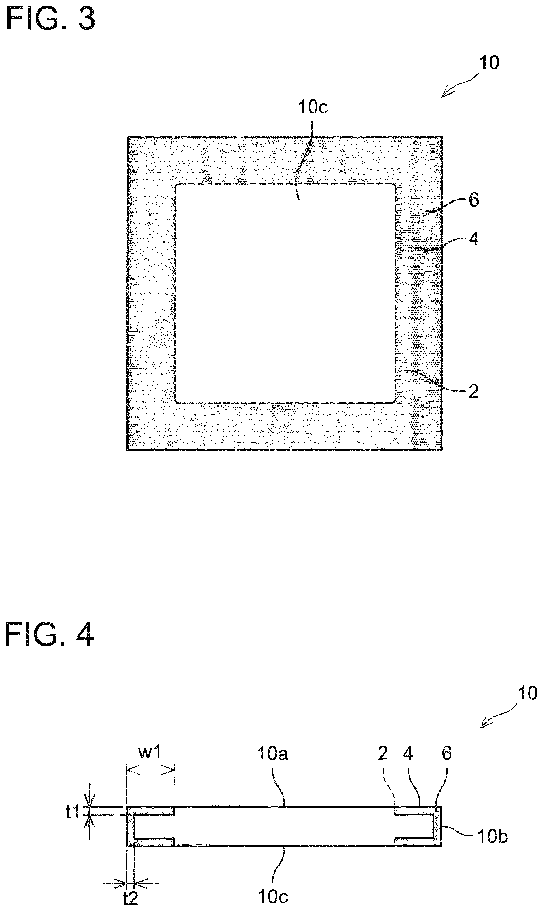

As shown in FIG. 3, a rear surface 10c of the fireproof board 10 also includes a first region 2 and a second region 4. The second region 4 is covered with the glass 6, and is continuous with the glass 6 covering the side surfaces 10b. That is, the fireproof board 10 is covered with the glass on its surface layer part except for a center part of the front surface 10a and a center part of the rear surface 10c (see FIG. 4 as well). In addition, as is apparent from FIG. 4, the front surface 10a and the rear surface 10c have a same layout of the first region 2 and the second region 4. In other words, the front surface 10a and the rear surface 10c have a same configuration.

The glass 6 has a same thickness on the front surface 10a and the rear surface 10c. A thickness t1 (third thickness) that is the thickness of the glass 6 on the front surface 10a and the thickness of the glass 6 on the rear surface 10c, is adjusted to approximately 50µm. Further, a thickness of the glass 6 on the side surfaces 10b is equal to the thickness of the glass 6 on the front surface 10a and the thickness of the glass 6 on the rear surface 10c. That is, a thickness t2 (first thickness) that is the thickness of the glass 6 on the side surfaces 10b is adjusted to approximately 50µm. In addition, a width W1 of the glass 6 is adjusted to 20mm on the front surface 10a and on the rear surface 10c. It should be noted that the fireproof board 10 is 400mm in length, 400mm in width, and 7mm in thickness, and a width of the second region 4 is adjusted to approximately 20mm.

Some advantages of the fireproof board 10 will be explained. As described above, the fireproof board 10 has the glass 6 on the side surfaces 10b thereof, the first region 2 not including the glass 6 at the center of the front surface 10a, and the second region 4 including the glass 6 at the end portion of the front surface 10a. By providing the glass 6, oxidation of a substrate (silicon nitride-bonded silicon carbide) of the fireproof board 10 is suppressed, and durability (corrosion resistance) of the fireproof board 10 is enhanced. Further, by providing the first region 2, when an object to be heated is placed on the fireproof board 10 and heated, adhesion of the object to the fireproof board 10 via the glass is suppressed. A front layer of the object is suppressed from peeling off and adhering to the glass. Further, when the object is adhered to the glass, surface roughness is generated on the front surface of the fireproof board. Typically, projecting portions are formed on the front surface of the fireproof board by the object adhered to fireproof board. When a next object to be heated is heated by using the fireproof board having the projecting portions thereon, the previously heated object adhered to the fireproof board may be adhered to the next object, or a shape of the next object may be deformed. By preventing adhesion of the object to the glass, the next object can be suppressed from being adversely affected.

Other advantages of the fireproof board 10 will be explained. In the fireproof board 10, both of the front surface 10a and the rear surface 10c have the first region 2 and the second region 4, respectively. That is, both of the front surface 10a and the rear surface 10c can be used as an upper surface in a direction of gravity. For example, when the front surface 10a of the fireproof board 10 is damaged, the object to be heated can be placed on the rear surface 10c. Further, warpage or the like may be suppressed from occurring on the fireproof board 10 by alternatively using the front surface 10a and the rear surface 10c as the upper surface in the direction of gravity.

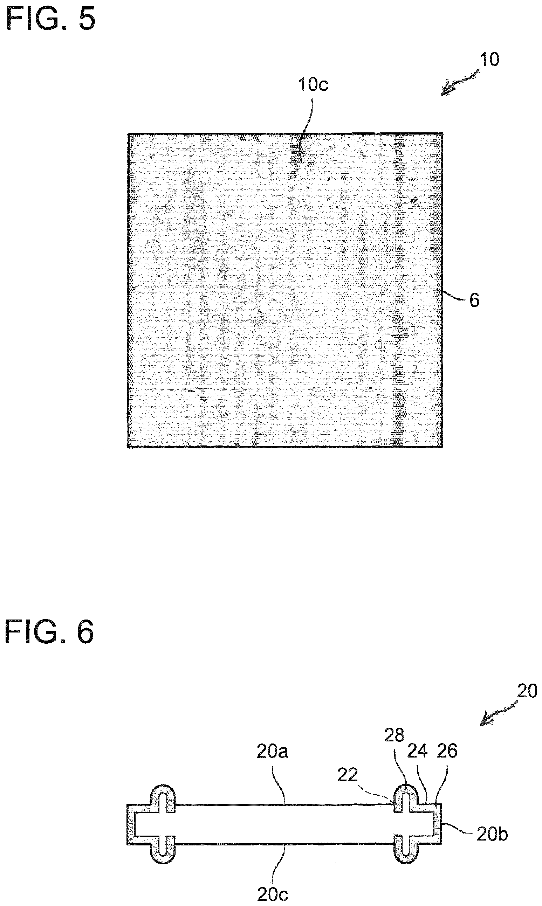

It should be noted that the first region 2 is not necessarily provided on both of the front surface and rear surface of the fireproof board 10. FIG. 5 shows a variant of the fireproof board 10. As shown in FIG. 5, the glass 6 is provided over an entire surface of the rear surface 10c of the fireproof board 10. The corrosion resistance of the fireproof board 10 is further enhanced by providing the glass 6 over the entire surface of the rear surface 10c.

### (Second embodiment)

Referring to FIG. 6, a fireproof board 20 will be explained. It should be noted that the fireproof board 20 is a variant of the fireproof board 10 and each part of a front surface 20a and a rear surface 20c provided with a second region 24 in the fireproof board 20 has a different shape from the corresponding part in the fireproof board 10. With respect to the fireproof board 20, substantially the same components as those of the fireproof board 10 may be assigned with the same reference numbers in lower digit, and explanation thereof may be omitted.

As shown in FIG. 6, the fireproof board 20 includes a first region 22 and a second region 24 on each of the front surface 20a and the rear surface 20c. In the fireproof board 20, projecting portions 28 are provided at end portions of the front surface 20a and rear surface 20c. The projecting portions 28 surround the end portions of the front surface 20a and the rear surface 20c. The projecting portions 28 are provided in the second regions 24. In other words, the second regions 24 are respectively provided outside the projecting portions 28 on the front surface 20a and on the rear surface 20c. The insides of the projecting portions 28 are the first regions 22. The second regions 24 and side surfaces 20b, collectively corresponding to "a side surface" of the claims, are covered with glass 26.

By providing the projecting portions 28, when heating objects to be heated by stacking a plurality of the fireproof boards 20, spacers (not shown) disposed between the fireproof boards are easily positioned. Further, when sands are provided on a surface of the fireproof board 20 (surface on which the object to be heated is placed), the sands can be securely retained on the surface of the fireproof board 20.

### (Experimental Example)

Experimental results regarding relationship between a thickness of the glass 6, adhesion of the heated object to the glass, and durability (corrosion resistance) of silicon nitride-bonded silicon carbide material, is shown in Table 1.

**(Table 1)**

| Thickness of Glass (*µ*m) | | 0 | 3 | 5 | 7 | 10 | 50 | 100 |
|---|---|---|---|---|---|---|---|---|
| Adhered to Glass | Occurrence Rate (%) | 0 | 0 | 0 | 5 | 20 | 99 | 100 |
| | Evaluation | ○ | ○ | ○ | ○ | × | × | × |
| Corrosion Resistance | Number of Particles | 253 | 120 | 65 | 31 | 23 | 4 | 3 |
| | Evaluation | × | × | ○ | ○ | ○ | ○ | ○ |

Evaluation items and evaluation methods in the experimental example will be explained. The adhesion to the glass was measured by the following procedure: Glass having a thickness shown in Table 1 was provided over an entire surface of the front surface of the fireproof board, the object to be heated was placed on the surface of the fireproof board (surface of the glass) and heated at 1600°C for five hours under 1hPa of Ar atmosphere, and the surface (the surface on which the object to be heated was placed) of the fireproof board after heating was observed. In the experiment, ten pieces of the objects to be heated were simultaneously heated, occurrence rate of phenomenon where the object was adhered to the glass was calculated after heating. Samples having less than 20% of the occurrence rate of the phenomenon where the object was adhered to the glass were evaluated to be good (in table: ○), and samples having equal to or more than 20% were evaluated to be bad (in table: X).

The corrosion resistance (durability) was measured by the following procedure. The fireproof board having a glass thickness in Table 1 was heated under the conditions described above without placing the object to be heated thereon, and then a number of particles on the surface of the fireproof board after heating was measured. Ar atmosphere contains several ppm of oxygen. Due to this, when silicon nitride-bonded silicon carbide comes into contact with atmospheric gas in a heating furnace, bonding parts of Si particles in the silicon nitride-bonded silicon carbide are decomposed, and Si particles cannot be retained on the surface of the fireproof board, resulting in particle shedding. Accordingly, the corrosion resistance of the fireproof board can be evaluated by measuring a number of SiC particles. An adhesive tape (carbon double-faced tape: P/N780004523: manufactured by JEOL Ltd.) was attached at a pressure of 50g/cm² for ten seconds to the surface of the fireproof board after heating, and a number of particles attached to the adhesive tape in an area of 2mmx2mm was measured. A sample by which less than 100 particles were attached to the tape was evaluated to be good (○), and a sample by which equal to or more than 100 particles were attached to the tape was evaluated to be bad (×).

As shown in Table 1, it was confirmed that as the thickness of the glass is smaller, adhesion of the heated object to the glass is reduced. From the results in Table 1, it was confirmed that when the thickness of the glass (second thickness) of the first region 2 in the fireproof board 10 is less than 10µm, the adhesion of the heated object to the glass is suppressed. Further, when the thickness of the glass is less than 5µm, a particularly good result was obtained that the heated object was not adhered at all. That is, when the thickness of the glass was less than 5µm, the phenomenon where the surface layer of the heated object was peeled off did not occur at all. It was confirmed that product yield of the heated object is remarkably improved by making the thickness of the glass in the first region 2 less than 5µm.

As shown in Table 1, it was confirmed that as the thickness of the glass is large, the corrosion resistance of the fireproof board is improved. From the results in Table 1, it was confirmed that when the glass thickness of the side surfaces 10b (first thickness) of the fireproof board 10 and the glass thickness in the second region 4 (third thickness) are equal to or more than 5µm, the fireproof board having excellent corrosion resistance is obtained. Further, it was confirmed that when the glass thickness was equal to or more than 10µm, the number of attached particles was less than 30, confirming that the corrosion resistance is remarkably improved.

As shown in Table 1, when the thickness of the glass is equal to or more than 5µm and less than 10µm, results excellent both in adhesion of the object to the glass and in the corrosion of the fireproof board are obtained. Accordingly, when the thickness of the glass in the first region 2 is equal to or more than 5µm and less than 10µm, the adhesion of the object to the glass can be suppressed while the corrosion resistance of the whole fireproof board 10 can be improved. It should be noted that even in this occasion, the thickness of the glass on the first region 2 (second thickness) is preferably smaller than the thickness of the glass on the side surface of the fireproof board (first thickness) or the thickness of the glass on the second region (third thickness). In other words, the first thickness and the third thickness are preferably larger than the second thickness. Due to this, the corrosion resistance of the fireproof board is more reliably enhanced.

While specific examples of the present invention have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations.

## Claims

1. A fireproof board (10, 20) of silicon nitride-bonded silicon carbide, wherein
the fireproof board (10, 20) has a side surface (10b, 20b), a front surface (10a, 20a), and a rear surface (10c, 20c),
the side surface is covered with glass (6) of a first thickness (t2), and
the front surface has a first region (2), the first region being covered with glass of a second thickness that is less than the first thickness, or the first region being not covered with glass;
wherein the first thickness (t2) is 5 µm or more and 100 µm or less and the second thickness is 7 µm or less.

2. The fireproof board according to claim 1, wherein the first region (2) is also provided on the rear surface (10c, 20c).

3. The fireproof board according to claim 1 or claim 2, wherein
the at least one surface has a second region (4), the second region (4) being covered with glass of a third thickness that is more than the second thickness,
the first region (2) is provided at a center of the at least one surface, and
the second region (4) surrounds the first region (2).

4. The fireproof board (10, 20) according to claim 3, wherein the second region (4) is provided over an entire surface outside the first region (2).

5. The fireproof board (10, 20) according to claim 3 or claim 4, wherein the first and second regions (2, 4) are provided on both of the front and rear surfaces (10a, 20a, 10c, 20c).

6. The fireproof board (10, 20) as of any one of claims 3 to 5, wherein the third thickness (tl) is in a range from 10µm to 100 µm.

## Patentansprüche

1. Feuerfeste Platte (10, 20) aus Siliziumnitrid-gebundenem Siliziumkarbid,
wobei die feuerfeste Platte (10, 20) eine Seitenfläche (10b, 20b), eine Vorderseitenfläche (10a, 20a) und eine Rückseitenfläche (10c, 20c) aufweist,
wobei die Seitenfläche mit Glas (6) einer ersten Dicke (t2) bedeckt ist, und
wobei die Vorderseitenfläche eine erste Region (2) aufweist, wobei die erste Region mit Glas einer zweiten Dicke, die geringer als die erste Dicke ist, bedeckt ist, oder wobei die erste Region nicht mit Glas bedeckt ist;
wobei die erste Dicke (t2) 5 µm oder mehr und 100 µm oder weniger ist, und die zweite Dicke 7 µm oder weniger ist.

2. Feuerfeste Platte gemäß Anspruch 1, wobei die erste Region (2) auch auf der Rückseitenfläche (10c, 20c) bereitgestellt ist.

3. Feuerfeste Platte gemäß Anspruch 1 oder Anspruch 2,
wobei die mindestens eine Fläche eine zweite Region (4) aufweist, wobei die zweite Region (4) mit Glas einer dritten Dicke, die größer als die zweite Dicke ist, bedeckt ist,
wobei die erste Region (2) in einer Mitte der mindestens eine Fläche bereitgestellt ist, und
wobei die zweite Region (4) die erste Region (2) umgibt.

4. Feuerfeste Platte (10, 20) gemäß Anspruch 3, wobei die zweite Region (4) über eine gesamte Fläche außerhalb der ersten Region (2) bereitgestellt ist.

5. Feuerfeste Platte (10, 20) gemäß Anspruch 3 oder Anspruch 4, wobei die erste und die zweite Region (2, 4) sowohl auf der Vorderseiten- als auch auf der Rückseiten-Fläche (10a, 20a, 10c, 20c) bereitgestellt sind.

6. Feuerfeste Platte (10, 20) nach einem der Ansprüche 3 bis 5, wobei die dritte Dicke (t1) in einem Bereich von 10 µm bis 100 µm ist.

## Revendications

1. Planche ignifugée (10, 20) réalisée à partir de carbure de silicium relié avec du nitrure de silicium, dans laquelle :
la planche ignifugée (10, 20) a une surface latérale (10b, 20b), une surface avant (10a, 20a) et une surface arrière (10c, 20c),
la surface latérale est recouverte avec du verre (6) d'une première épaisseur (t2), et
la surface avant a une première région (2), la première région étant recouverte avec du verre d'une deuxième épaisseur qui est inférieure à la première épaisseur, ou bien la première région n'est pas recouverte de verre ;
dans laquelle la première épaisseur (t2) est de 5 µm ou plus et 100 µm ou moins et la deuxième épaisseur est de 7 µm ou moins.

2. Planche ignifugée selon la revendication 1, dans laquelle la première région (2) est également prévue sur la surface arrière (10c, 20c).

3. Planche ignifugée selon la revendication 1 ou la revendication 2, dans laquelle :
la au moins une surface a une seconde région (4), la seconde région (4) étant recouverte avec du verre d'une troisième épaisseur qui est supérieure à la deuxième épaisseur,
la première région (2) est prévue au niveau d'un centre de la au moins une surface, et
la seconde région (4) entoure la première région (2).

4. Planche ignifugée (10, 20) selon la revendication 3, dans laquelle la seconde région (4) est prévue sur toute la surface à l'extérieur de la première région (2).

5. Planche ignifugée (10, 20) selon la revendication 3 ou la revendication 4, dans laquelle les première et seconde régions (2, 4) sont prévues à la fois sur les surfaces avant et arrière (10a, 20a, 10c, 20c).

6. Planche ignifugée (10, 20) selon l'une quelconque des revendications 3 à 5, dans laquelle la troisième épaisseur (t1) est dans la plage de 10 µm à 100 µm.
